Europäisches Patentamt

European Patent Office

Office européen des brevets

(19)

(11) Veröffentlichungsnummer : **0 104 500**
**B1**

(12) # EUROPÄISCHE PATENTSCHRIFT

(45) Veröffentlichungstag der Patentschrift :
30.07.86

(21) Anmeldenummer : 83108670.7

(22) Anmeldetag : 02.09.83

(51) Int. Cl.⁴ : **B 23 K 35/28, H 01 H 1/02//**
**C22C5/04, B22F7/04**

(54) Lotlegierungen zum Auflöten von Kontaktwerkstoffen.

(30) Priorität : 25.09.82 DE 3235574

(43) Veröffentlichungstag der Anmeldung :
04.04.84 Patentblatt 84/14

(45) Bekanntmachung des Hinweises auf die Patenterteilung : 30.07.86 Patentblatt 86/31

(84) Benannte Vertragsstaaten :
AT BE CH DE FR GB IT LI LU NL SE

(56) Entgegenhaltungen :
DE-A- 1 483 436
DE-A- 2 840 415
DE-B- 1 180 224
DE-B- 2 365 450
Encyclopedia of chemical technology, 3. Ausgabe,
Band 21 (1983), Seite 350-351

(73) Patentinhaber : **Degussa Aktiengesellschaft**
**Weissfrauenstrasse 9**
**D-6000 Frankfurt am Main 1 (DE)**

(72) Erfinder : **Malikowski, Willi**
**Brentanoplatz 11**
**D-8750 Aschaffenburg (DE)**
Erfinder : **Wolmer, Roger**
**Ginnheimer Hohl 20**
**D-6000 Frankfurt 50 (DE)**
Erfinder : **Böhm, Wolfgang, Dr. Ing.**
**Kronbergweg 2**
**D-8755 Alzenau (DE)**

## Beschreibung

Die Erfindung betrifft die Verwendung von Silberlegierungen zum direkten Auflöten von oxidhaltigen Silberkontaktwerkstoffen, insbesondere von Silber-Zinnoxid, auf Kontaktträger.

Edelmetallhaltige Kontaktwerkstoffe mit Metalloxideinlagerungen, wie Kadmiumoxid, Zinnoxid oder Indiumoxid, werden üblicherweise auf unedle Trägerwerkstoffe, wie Eisen, Nickel oder Kupfer aufgelötet. Da diese Verbundwerkstoffe eine hohe Lebensdauer im Schaltbetrieb gewährleisten müssen, ist eine feste Lötverbindung zwischen diesen Werkstoffen notwendig.

Solche Lötverbindungen stellt man in der Technik teilweise dadurch her, daß die Kontaktauflagen mit Feinsilber- oder Silber-Kadmium (-Zinn)-Legierungsschichten versehen werden, die gut lötbar sind. Da diese zusätzlichen Schichten zu höheren Kosten bei der Herstellung lötbarer Kontaktauflagen führen und einen hohen Silberanteil haben, gibt es auch Verfahren, die die Herstellung einer besonderen lötbaren Schicht umgehen und zu Direktlötungen führen.

Bekannt ist es (DE-AS-23 65 450), Silber-Metalloxid-Werkstoffe mit einer Silber-Kupfer-Legierung zu hintergießen und anschließend mit dem Träger zu verlöten. Auch das Aufbringen von Reaktivloten auf der Basis Kupfer-Silber-Phosphor auf Kontaktwerkstoffe ist bekannt (DE-OS-24 38 922).

In der DE-OS-30 11 821 wird ein aus zwei Teilen bestehendes Direktlot beschrieben, wobei eine Schicht aus AgP mit einer Schicht aus AgCd beim Lötvorgang zu einem einheitlichen Silber/Kupfer/Cadmium/Phosphor-Lot reagieren soll. Auch die DE-OS-29 48 915 beschreibt ein Direktlot aus Silber-Kupfer-Cadmium-Zinn-Indium zum Auflöten oxidhaltiger Silberkontaktwerkstoffe auf Kontaktträger. Dieses Lot benetzt die Silber-Metalloxidwerkstoffe recht gut, ohne zu spröden Phasen in der Diffusionszone zu führen. Ebenso wird in der DE-OS-31 23 357 ein Lot beschrieben, das insbesondere für Silber-Zinnoxid-Kontaktwerkstoffe geeignet ist und aus den Komponenten Silber-Zinn-Indium-Germanium besteht.

Es sind daher eine ganze Reihe von Lotlegierungen bekannt, die Silber-Metalloxide benetzen und in der Diffusionszone zwischen Kontaktwerkstoffen und Lot bzw. Träger und Lot keine versprödenden Reaktionszonen bilden. Allerdings haben die bekannten Lotlegierungen nur begrenzt Anwendung gefunden. Speziell bei Silber-Zinnoxid-Werkstoffen besteht die Hauptschwierigkeit, daß die Verbindungszone meist eine geringere Lebensdauer aufweist als der äußerst abbrandfeste Kontaktwerkstoff.

Die besondere Problematik der auf Träger aufgelöteten Kontaktwerkstoffe ist in dem durch Temperaturdifferenzen hervorgerufenen Spannungsaufbau begründet. An der Schaltfläche der Kontaktauflagen werden durch die Energie des Lichtbogens Temperaturen über 1 000 °C erreicht. Auf der gegenüberliegenden Seite des gelöteten Bauteils sollen Temperaturen herrschen, die nicht wesentlich über der Raumtemperatur liegen. Diese Temperaturdifferenz fällt über eine Entfernung von z. B. 3 mm ab. Daraus ergeben sich durch die ständigen Temperaturwechsel beim Schalten hohe Scher- und Zugspannungen, die zum Abschälen der Kontaktauflagen führen können. Bei Kontaktauflagen mit einer Feinsilberzwischenschicht können diese Spannungen bis zu einem gewissen Grad durch plastische Verformungen in dieser sehr duktilen Schicht abgebaut werden. Begrenzt wird die Lebensdauer dieses Verbundes jedoch durch die niedrige Festigkeit des Silbers oder der Verbindung des Silbers mit dem Silber/Metalloxid. Bei direkt aufgelöteten Kontaktauflagen kann eine solche Zwischenschicht jedoch nicht wirksam werden.

Aus der DE-A-28 40 415 sind Lote aus Silber-Kupferlegierungen mit 5 % Palladium bekannt, die zusammen mit Thermoplasten als Lotpaste zum Löten metallischer Werkstoffe, wie Kraftfahrzeugteilen, Installationen, Schmuck und Silberwaren, verwendet werden. Das Löten oxidhaltiger Kontaktwerkstoffe ist in diesem Dokument jedoch nicht erwähnt.

Aufgabe der Erfindung war es, Lotlegierungen zum direkten Auflöten von oxidhaltigen Silberkontaktwerkstoffen, insbesondere Silber-Zinnoxid auf Kontaktträger zu finden, die Silber-Metalloxidwerkstoffe gut benetzen und damit gut verlötbar sind. Zum anderen sollten die Lotlegierungen duktil sein, um Scher- und Zugspannungen durch plastische Verformung abbauen zu können, und eine höhere Festigkeit aufweisen als Silber, so daß durch die Scher- und Zugspannungen beim Schalten die Bruchfestigkeit nicht überschritten wird. Um zusätzliche Spannungen zu vermeiden, sollten diese Lotlegierungen außerdem im thermischen Ausdehnungskoeffizienten den anderen Bauteilkomponenten angepaßt sein.

Diese Aufgabe wurde erfindungsgemäß gelöst, durch die Verwendung von Legierungen, die 20 bis 35 Gew. % Kupfer, 0,1 bis 5 Gew. % Palladium, Rest Silber enthalten.

Solche Legierungen erfüllen überraschenderweise die gestellten Aufgaben in vollem Umfang. Diese Lotlegierungen übertreffen in bezug auf Lebensdauer der damit hergestellten Lötverbindung die konventionellen Feinselberplattierung und die bisher bekannten Direktlote. Schaltversuche in mehreren Schütztypen zeigten, besonders in Verbindung mit den hochabbrandfesten Silber/Zinnoxid-Kontaktwerkstoffen, hinsichtlich der Lebensdauer des Bauteils eine beträchtliche Überlegenheit dieser erfindungsgemäßen Lotlegierungen. Außerdem benetzen sie die bekannten Silber/Metalloxid-Werkstoffe sehr gut, ohne durch Reaktionen auf bzw. mit z. B. Zinnoxid zu spröden Diffusionszonen zu führen.

Besonders bewährt haben sich Lotlegierungen, die neben Silber 24 bis 32 Gew. % Kupfer und 0,5 bis 3 Gew. % Palladium enthalten.

Durch Verwendung von Lotlegierungen mit 1 Gew. % Palladium konnten besonders wirtschaftliche Legierungen gefunden werden, die zudem noch den Vorteil einer niedrigeren Arbeitstemperatur und geringfügig erhöhter Lebensdauer besitzen.

Folgende Beispiele sollen die Vorteile der erfindungsgemäßen Verwendung dieser Lotlegierungen aufzeigen :

1. Plättchen aus Ag/SnO$_2$ (88/12) in den Abmessungen 9 × 9 × 1,25 mm$^3$ wurden mit einer Lotlegierung aus Silber mit 26,6 % Kupfer und 5 % Palladium unter Schutzgas auf Cu-plattierte Stahlträger aufgelötet. Die Lotzugabe erfolgte über eine eingelegte Lotfolie. Die Schaltzahlen in einem 75A-Schütz betrugen im Mittel 70 000 Schaltspiele im AC4-Betrieb. Demgegenüber erreichten konventionell auf silberplattiertem Material gelötete Kontakte nur 30 000 Schaltspiele.

2. AgSnO$_2$ (88/12)-plättchen in den Abmessungen 14 × 15 × 2,3 mm$^3$ wurden mit einem Lot der Zusammensetzung AgCu28Pdl unter Schutzgas auf Cu-Träger aufgelötet. Die Schaltzahlen in einem 250A-Schütz betrugen 120 000 (Ag-plattiertes Material 90 000).

## Patentansprüche

1. Verwendung von Legierungen aus 20 bis 35 Gew. % Kupfer, 0,1 bis 5 Gew. % Palladium, Rest Silber, zum direkten Auflöten von oxidhaltigen Silberkontaktwerkstoffen, insbesondere von Silber-Zinnoxid, auf Kontaktträger.

2. Verwendung von Legierungen aus 24 bis 32 Gew. % Kupfer, 0,5 bis 3 Gew. % Palladium, Rest Silber, gemäß Anspruch 1.

3. Verwendung von Legierungen mit 20 bis 35 Gew. % Kupfer, 1 Gew. % Palladium, Rest Silber, gemäß Anspruch 1.

## Claims

1. The use of alloys consisting of from 20 to 35 % by weight of copper, from 0.1 to 5 % by weight of palladium, and the remainder silver, for directly soldering oxide-containing silver contact materials, particularly silver tin oxide, on contact carriers.

2. The use of alloys consisting of from 24 to 32 % by weight of copper, from 0.5 to 3 % by weight of palladium and the remainder of silver, according to claim 1.

3. The use of alloys containing from 20 to 35 % by weight of copper, 1 % of palladium and the remainder silver, according to claim 1.

## Revendications

1. Utilisation d'alliages contenant 20 à 35 % en poids de cuivre, 0,1 à 5 % en poids de palladium, le reste étant de l'argent, pour la soudure directe de matériaux pour contact en argent contenant un oxyde, en particulier en argent-oxyde d'étain, sur un support de contact.

2. Utilisation d'alliages contenant 24 à 32 % en poids de cuivre, 0,5 à 3 % en poids de palladium, le reste étant de l'argent, suivant la revendication 1.

3. Utilisation d'alliages comprenant 20 à 35 % en poids de cuivre, 1 % en poids de palladium, le reste étant de l'argent suivant la revendication 1.